(19) Europäisches Patentamt / European Patent Office / Office européen des brevets

(11) **EP 3 438 800 A1**

(12) **EUROPEAN PATENT APPLICATION**
published in accordance with Art. 153(4) EPC

(43) Date of publication:
**06.02.2019 Bulletin 2019/06**

(51) Int Cl.:
*G06F 3/041* (2006.01)   *G06F 3/044* (2006.01)
*H05K 1/02* (2006.01)

(21) Application number: **17775404.1**

(22) Date of filing: **30.03.2017**

(86) International application number:
**PCT/JP2017/013269**

(87) International publication number:
**WO 2017/170870 (05.10.2017 Gazette 2017/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.03.2016 JP 2016067614**

(71) Applicant: **Fujikura Ltd.**
**Tokyo 135-8512 (JP)**

(72) Inventors:
• **HIRANO, Hiroyuki**
  **Sakura-shi**
  **Chiba 285-8550 (JP)**
• **OGURA, Shingo**
  **Sakura-shi**
  **Chiba 285-8550 (JP)**

(74) Representative: **Ter Meer Steinmeister & Partner**
**Patentanwälte mbB**
**Artur-Ladebeck-Strasse 51**
**33617 Bielefeld (DE)**

(54) **WIRING BODY, CIRCUIT BOARD, AND TOUCH SENSOR**

(57)   A wiring body 4 includes: a first resin portion 5; and a first conductor portion 6 which is linear and is disposed on the first resin portion 5, the first conductor portion 6 includes a first conductor portion end surface 64 which is positioned at a tip end of the first conductor portion 6 in a first extending direction of the first conductor portion 6, and a following Expression (1) is satisfied;

$$W_1/T_1 \leq 1 \ \ldots(1)$$

where, in the Expression (1), $W_1$ is a first length obtained by projecting the first conductor portion end surface 64 on a plane parallel to the first extending direction, and $T_1$ is a height of the first conductor portion 6.

FIG. 7

## Description

### TECHNICAL FIELD

The present invention relates to a wiring body, a wiring board, and a touch sensor.

For designated countries that are permitted to be incorporated by reference in the literature, the contents of Patent Application No. 2016-067614, filed with Japan Patent Office on March 30, 2016 is incorporated herein by reference and is regarded as a part of the description of this specification.

### BACKGROUND ART

It is known as a touch panel that two electrode patterns including a plurality of grids configured of a metal thin wire are disposed to intersect with each other and a combination pattern formed of a plurality of small grids is formed (for example, refer to Patent Document 1).

In addition, a conductor wiring pattern which is formed by filling an intaglio with a conductor material, transferring the conductor material onto a substrate to be transferred by using an offset printing method, and performing the subsequent heating process, is known (for example, refer to Patent Document 2).

### CITATION LIST

### PATENT DOCUMENT

Patent Document 1: JP 2012-256320 A
Patent Document 2: WO 2008/149969 A

### SUMMARY OF THE INVENTION

### PROBLEM TO BE SOLVED BY THE INVENTION

In a case where the metal thin wire configuring the electrode pattern of the touch panel of Patent Document 1 is in a flared shape as with Patent Document 2, the metal thin wire is easily visible, and thus, the combination pattern glares, and visibility of the touch panel decreases.

An object of the present invention is to provide a wiring body, a wiring board, and a touch sensor which are capable of improving visibility.

### MEANS FOR SOLVING PROBLEM

[1] A wiring body according to the present invention is a wiring body including: a first resin portion; and a first conductor portion which is linear and is disposed on the first resin portion, in which the first conductor portion includes a first end surface which is positioned at a tip end of the first conductor portion in a first extending direction of the first conductor portion, and a following Expression (1) is satisfied;

$$W_1/T_1 \leq 1 \ldots(1)$$

where, in the Expression (1), $W_1$ is a first length obtained by projecting the first end surface on a plane parallel to the first extending direction, and $T_1$ is a height of the first conductor portion.

[2] In the wiring body according to the present invention described above, the first conductor portion may include: a contact surface which is in contact with the first resin portion; a top surface which is positioned on a side opposite to the contact surface; and a side surface which is interposed between the contact surface and the top surface and is connected to the first end surface, and the first end surface may include an arc portion which is connected to the side surface.

[3] In the wiring body according to the present invention described above, a following Expression (2) may be satisfied.

$$W_1 = W_2 \ldots(2)$$

where, in the Expression (2), $W_2$ is a second length obtained by projecting the side surface on a plane parallel to a width direction of the first conductor portion.

[4] In the wiring body according to the present invention described above, the first conductor portion may include a protruding portion which is formed along a circumference of the top surface and protrudes towards a side separated from the first resin portion.

[5] In the wiring body according to the present invention described above, the height of the first conductor portion may be 500 nm to 10 $\mu$m.

[6] In the wiring body according to the present invention described above, the first resin portion may include: a flat portion which is formed in the shape of a layer; and a convex portion which is disposed corresponding to the first conductor portion and protrudes towards the first conductor portion side from the flat portion, the convex portion may include a third end surface which is positioned at the tip end in the first extending direction, the first end surface and the third end surface may be continuously connected to each other, and a following Expression (3) may be satisfied.

$$W_5/T_2 \leq 1 \ldots(3)$$

where, in the Expression (3), $W_5$ is a sum of the first length and a length obtained by projecting the third end surface on the plane parallel to the first extending direction, and $T_2$ is a sum of the height of the first conductor portion and a height of the convex portion.

[5] In the wiring body according to the present invention described above, the wiring body may further include: a second resin portion which is disposed to cover the first conductor portion; and a second conductor portion which is linear, is disposed on the second resin portion and has a height substantially equal to a height of the first conductor portion, the second conductor portion may include a second end surface positioned at a tip end of the second conductor portion in a second extending direction of the second conductor portion, the first and second conductor portions may be positioned on the same virtual straight line in a see-through plan view, the first and second end surfaces may be disposed to face each other in the see-through plan view, and following Expression (4) and Expression (5) may be satisfied;

$$(W_4 - W_3) \times 0.5/T_1 \le 1 \ \dots(4)$$

$$W_3 < 50 \ \mu m \ \dots(5)$$

where, in the Expression (4) and the Expression (5), $W_3$ is a third length which is the shortest length of lengths obtained by projecting an interval of the first and second end surfaces on a plane parallel to a third extending direction of the virtual straight line, and $W_4$ is a fourth length which is the longest length of the lengths obtained by projecting the interval of the first and second end surfaces on the plane parallel to the third extending direction.

[6] A wiring board according to the present invention is a wiring board including: the wiring body described above; and a support body supporting the wiring body.

[7] A touch sensor according to the present invention is a touch sensor including: the wiring board described above.

EFFECT OF THE INVENTION

According to the present invention, the tip end of the first conductor portion is not in a flared shape. For this reason, the first conductor portion is hardly visible, and thus, it is possible to improve visibility of the wiring body.

BRIEF DESCRIPTION OF DRAWINGS

Fig. 1 is a plan view illustrating a touch sensor in one embodiment of the present invention.
Fig. 2 is an exploded perspective view illustrating a wiring board in one embodiment of the present invention.
Fig. 3 is a partially enlarged view of part III of Fig. 1.
Fig. 4 is a cross-sectional view along line IV-IV of Fig. 3.
Fig. 5 is a cross-sectional view for illustrating a first conductor portion in one embodiment of the present invention.
Fig. 6 is a perspective view in which a tip end of the first conductor portion in one embodiment of the present invention is seen from the upper side.
Fig. 7 is a cross-sectional view along line VII-VII of Fig. 3.
Fig. 8(A) to Fig. 8(E) are cross-sectional views (part 1) for illustrating a manufacturing method of a wiring body in one embodiment of the present invention.
Fig. 9(A) to Fig. 9(E) are cross-sectional views (part 2) for illustrating the manufacturing method of the wiring body in one embodiment of the present invention.

MODE(S) FOR CARRYING OUT THE INVENTION

Hereinafter, an embodiment of the present invention will be described on the basis of the drawings.

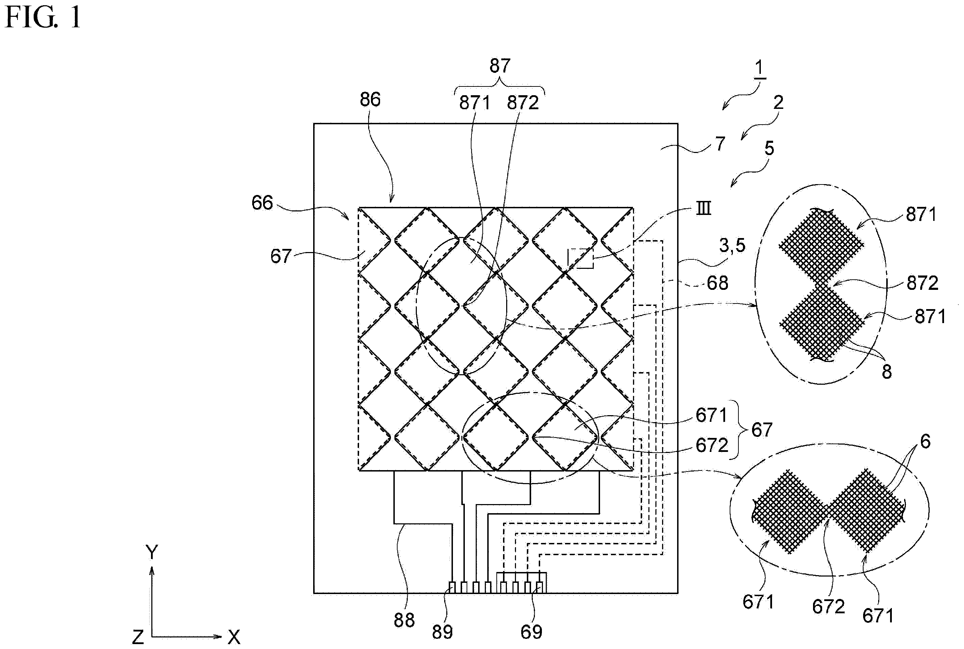

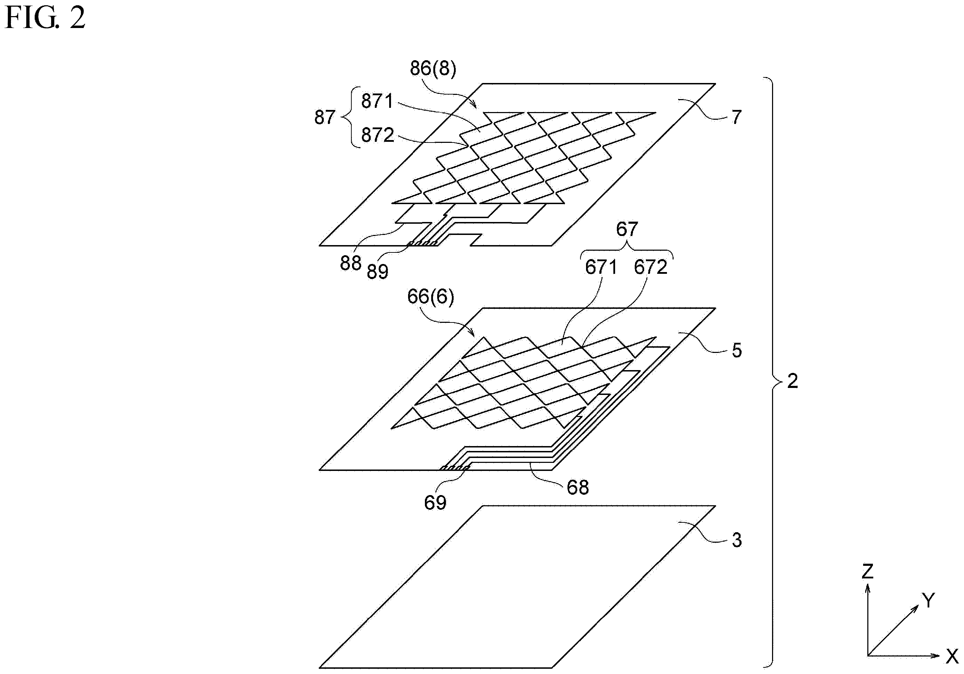

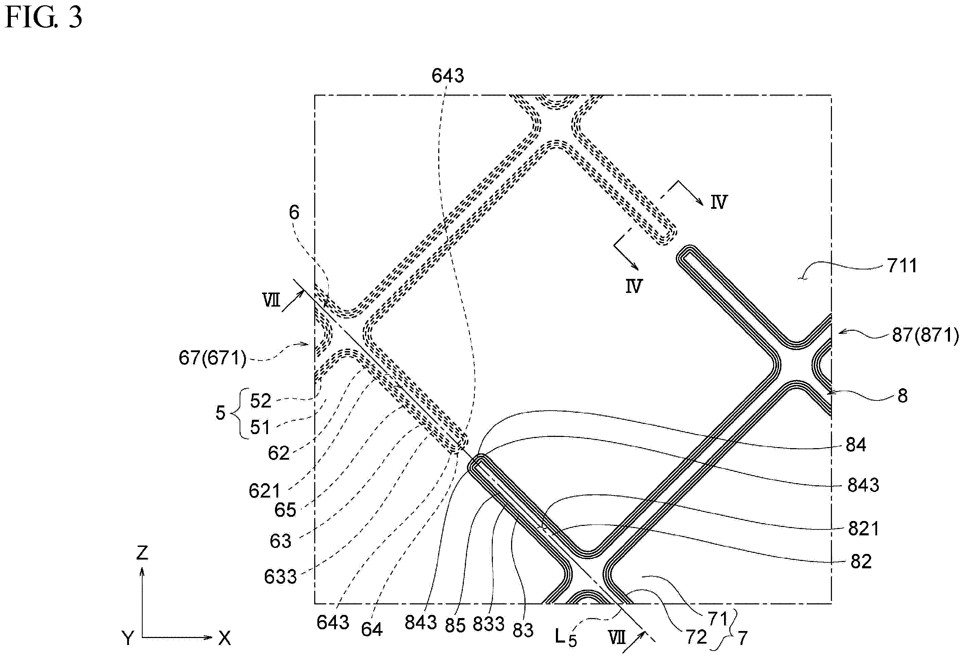

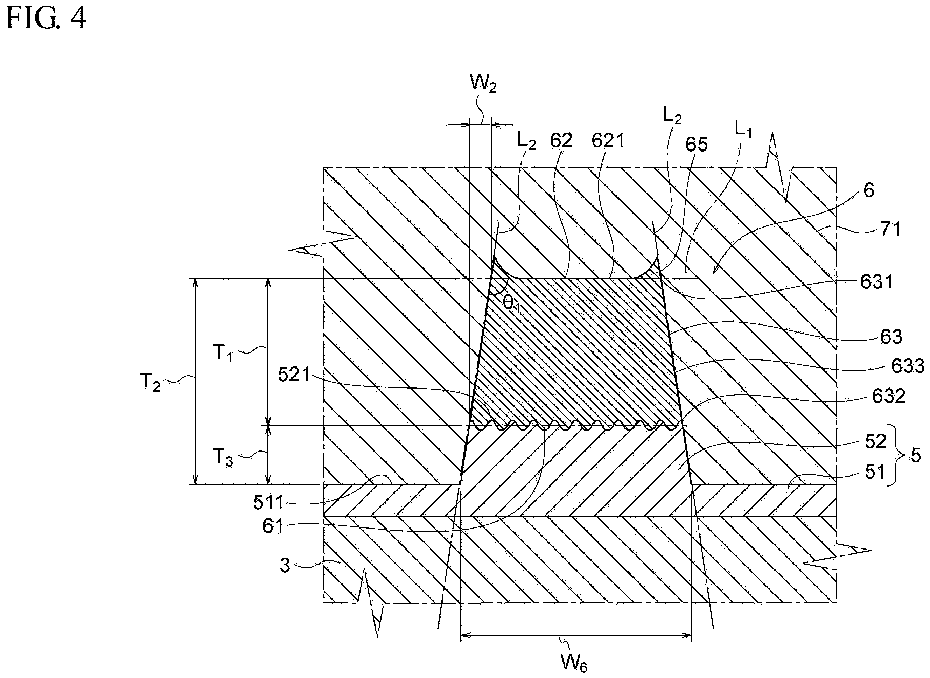

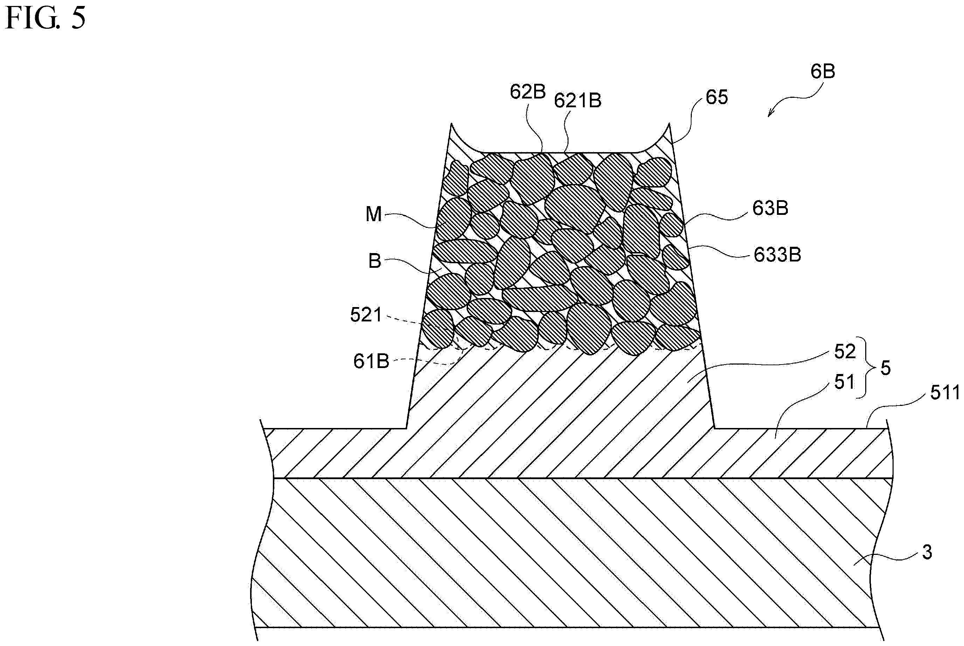

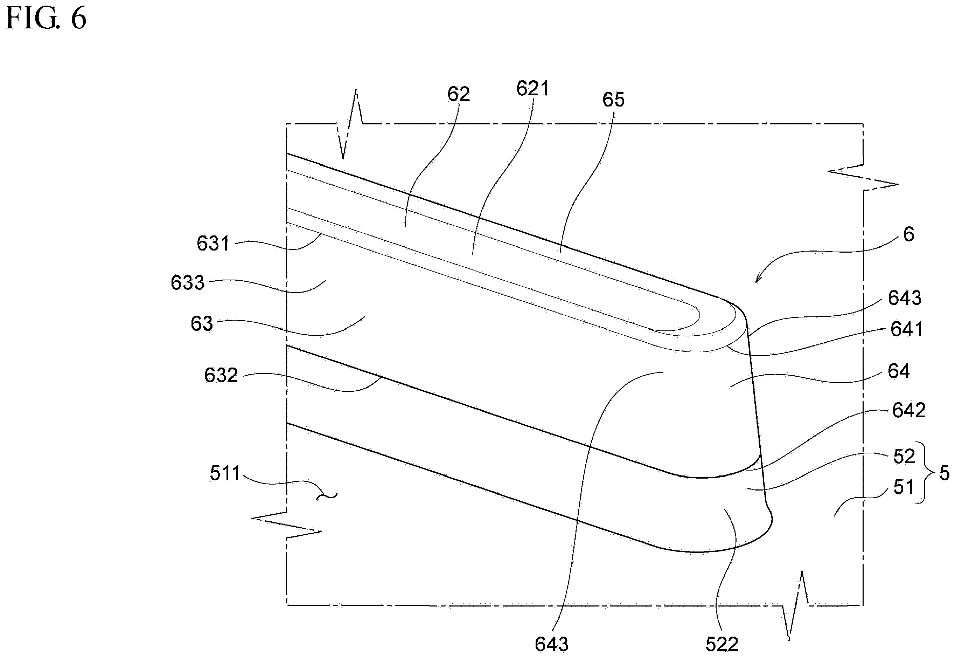

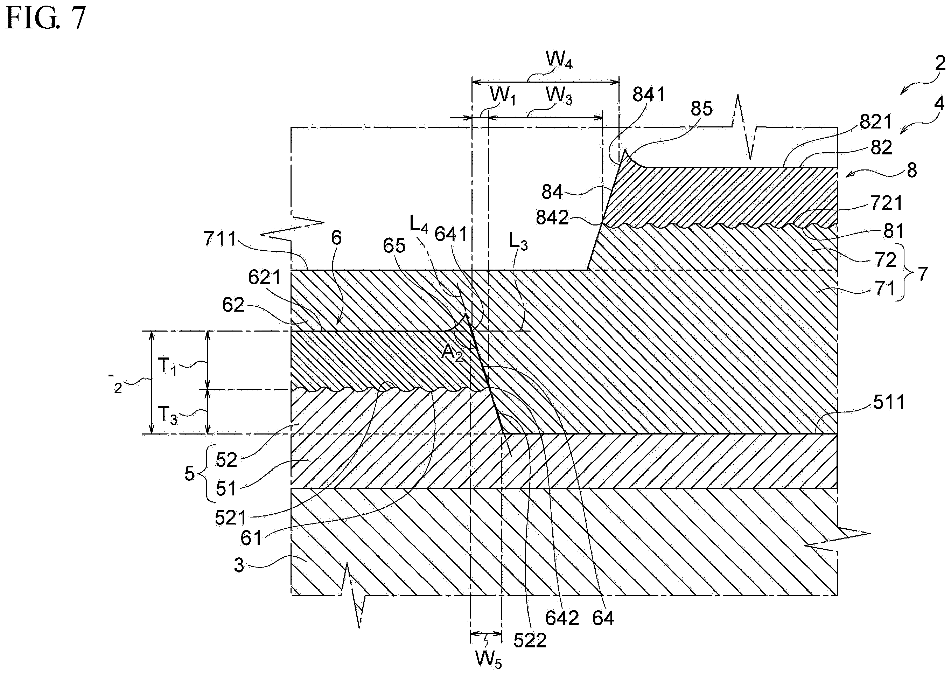

Fig. 1 is a plan view illustrating a touch sensor in one embodiment of the present invention, Fig. 2 is an exploded perspective view illustrating a wiring board in one embodiment of the present invention, Fig. 3 is a partially enlarged view of part III of Fig. 1, Fig. 4 is a cross-sectional view along line IV-IV of Fig. 3, Fig. 5 is a cross-sectional view for illustrating a first conductor portion in one embodiment of the present invention, Fig. 6 is a perspective view in which a tip end of the first conductor portion in one embodiment of the present invention is seen from the upper side, and Fig. 7 is a cross-sectional view along line VII-VII of Fig. 3.

As illustrated in Fig. 1, a touch sensor 1 including a wiring board 2 of this embodiment is a projection electrostatic capacitance type touch panel sensor, and for example, is used as an input device having a function of detecting a touch position by being combined with a display device (not illustrated) or the like. The display device is not particularly limited, and a liquid crystal display, an organic EL display, electronic paper, or the like can be used. In the touch sensor 1, a detection electrode and a driving electrode (first and second electrodes 67 and 87 described below) are disposed to overlap with the image to be projected onto the display device, and a predetermined voltage is periodically applied two between two electrodes 67 and 87 from an external circuit (not illustrated).

In such a touch sensor 1, for example, in a case where a finger of a operator (an external conductor) is close to the touch sensor 1, a capacitor (electrostatic capacitance) is formed between the external conductor and the touch sensor 1, and an electrical state between two electrodes is changed. The touch sensor 1 is capable of detecting an operating position of the operator on the basis of an electrical change between two electrodes. The "touch sensor 1" in this embodiment corresponds to an example of the "touch sensor" in the present invention, and the "wiring board 2" in this embodiment corresponds to an example of the "wiring board" in the present invention.

As illustrated in Fig. 1 and Fig. 2, the wiring board 2 includes a substrate 3 and a wiring body 4. The wiring board 2 of this embodiment is configured to have transparency (light transmittance) as a whole in order to ensure visibility of the display device.

The substrate 3 is a transparent plate-like substrate which is capable of transmitting a visible light ray, and supports the wiring body 4. Polyethylene terephthalate (PET), polyethylene naphthalate (PEN), a polyimide resin (PI), a polyether imide resin (PEI), polycarbonate (PC), polyether ether ketone (PEEK), a liquid crystal polymer (LCP), a cycloolefin polymer (COP), a silicone resin (SI), an acrylic resin, a phenolic resin, an epoxy resin, green sheet, glass and the like can be exemplified as a material of which the substrate 3 is made. An easily adhesive layer or an optical adjusting layer may be formed on the substrate 3. The "substrate 3" in this embodiment corresponds to an example of the "support body" in the present invention.

As illustrated in Fig. 2, the wiring body 4 includes a first resin portion 5, a first conductor portion 6, a second resin portion 7, and a second conductor portion 8. In the wiring body 4 of this embodiment, the first resin portion 5, the first conductor portion 6, the second resin portion 7 and the second conductor portion 8 are sequentially laminated from the substrate 3 side. The "wiring body 4" in this embodiment corresponds to an example of the "wiring body" in the present invention, the "first resin portion 5" in this embodiment corresponds to an example of the "first resin portion" in the present invention, the "first conductor portion 6" in this embodiment corresponds to an example of the "first conductor portion" in the present invention, the "second resin portion 7" in this embodiment corresponds to an example of the "second resin portion" in the present invention, and the "second conductor portion 8" in this embodiment corresponds to an example of the "second conductor portion" in the present invention.

The first resin portion 5 is disposed to hold the first conductor portion 6, and for example, is made of an insulating material such as an UV curable resin, a thermosetting resin, or a thermoplastic resin such as an epoxy resin, an acrylic resin, a polyester resin, a urethane resin, a vinyl resin, a silicone resin, a phenolic resin or a polyimide resin, or a green sheet.

As illustrated in Fig. 4, the first resin portion 5 includes a first flat portion 51 and a first convex portion 52. The first flat portion 51 is a portion of the first resin portion 5 which is formed in the shape of a layer. A first upper surface 511 of the first flat portion 51 is approximately even. It is preferable that the thickness of the first flat portion 51, for example, is 5 $\mu$m to 100 $\mu$m.

The first convex portion 52 is provided on the first flat portion 51 and is integrally formed with the first flat portion 51. The first convex portion 52 is disposed corresponding to the first conductor portion 6 and supports the first conductor portion 6. The first convex portion 52 protrudes towards the first conductor portion 6 side from the first flat portion 51 in a width direction cross section of the first conductor portion 6. A height $T_3$ of the first convex portion 52 is preferably 100 nm to 10 $\mu$m, and is more preferably 500 nm to 5 $\mu$m. It is preferable that a width $W_6$ of the first convex portion 52 (the maximum width) is less than or equal to 50 $\mu$m.

The first convex portion 52 is formed in the shape of a straight line along an extending direction of the first conductor portion 6 (hereinafter, also referred to a "first extending direction"). A convex portion end surface 522 is formed at a tip end of the first convex portion 52 in the first extending direction. The convex portion end surface 522 is inclined to protrude to the outside of the first convex portion 52 as being close to the first flat portion 51 in a cross section along the first extending direction (a first extending direction cross section). The "convex portion end surface 522" in this embodiment corresponds to an example of the "third end surface" in the present invention.

The first convex portion 52 includes a first resin portion contact surface 521 which is in contact with the first conductor portion 6 (specifically, a first conductor portion contact surface 61 (described below)). As illustrated in Fig. 4, the first resin portion contact surface 521 has an unevenness shape which is complementary with respect to an unevenness shape of the first conductor portion contact surface 61. As illustrated in Fig. 7, the first resin portion contact surface 521 and the first conductor portion contact surface 61 also have a complementary unevenness shape in the first extending direction cross section of the first conductor portion 6. In Fig. 4 and Fig. 7, in order to describe the wiring body 4 of this embodiment to be easily understood, the unevenness shape of the first resin portion contact surface 521 and the first conductor portion contact surface 61 is exaggerated. The "extending direction cross section of the conductor portion" indicates the cross section of the conductor portion at the time of cutting a virtual straight line which passes through the center of the conductor portion in the plan view and extends in the extending direction. The "width direction cross section of the conductor portion" indicates the cross section of the conductor portion at the time of cutting a virtual straight line which extends in a direction orthogonal to the extending direction of the conductor portion in the plan view.

As illustrated in Fig. 1 and Fig. 2, a plurality of first conductor portions 6 are disposed on the first resin portion 5, and a first conductor pattern 66 is configured of the plurality of first conductor portions 6. The first conductor pattern 66 includes a plurality of first electrodes 67, a plurality of first lead-out wirings 68 and a plurality of first terminals 69.

The first electrode 67 is formed of the plurality of first conductor portions 6 into the shape of a reticulation. The first electrode 67 includes: first wide portions 671 in a diamond shape; and first joining portions 672 each of which connects the first wide portions 671 to each other. In one first electrode 67, the plurality of first wide portions 671 are arranged along an X direction at substantially regular intervals, and the corners of the adjacent first wide portions 671 are connected to each other by the first joining portion 672. In Fig. 1, in order to describe the first electrode 6 to be easily understood, the first wide portion 671 is illustrated by four sides which are in the shape of a straight line, but as illustrated in the partially enlarged view of Fig. 1, in actual fact, tip ends of the first conductor portions 6 protrude into the shape of a comb on each side of the first wide portion 671. The shape of the first wide portion 671 is not particularly limited to a diamond shape.

The plurality of first electrodes 67 are parallel in a Y direction in the drawing. Each of the first lead-out wirings 68 is connected to one longitudinal direction end of each of the first electrodes 67. Each of the first lead-out wirings 68 extends from one longitudinal direction end of each of the first electrodes 67 to the vicinity of the outer edge of the wiring body 4. Each of the first terminals 69 is disposed on the other end of each of the first lead-out wirings 68. The first terminal 69 is electrically connected to an external circuit (not illustrated).

The shape of each reticulation configuring a reticular shape of the first electrode 67 is not particularly limited. For example, the shape of the reticulation may be a triangle such as an equilateral triangle, an isosceles triangle and a rectangular triangle, or may be a quadrangle such as a parallelogram and a trapezoid. Alternatively, the shape of the reticulation may be an n-sided polygon such as a hexagon, an octagon, a dodecagon and an icosagon, a circle, an ellipse, a star or the like. Thus, a geometric pattern obtained by repeating various diagram units can be used as the shape of each reticulation of the first electrode 77. The first lead-out wiring 68 and the first terminal 69 may be in a reticular shape, as with the first electrode 67.

Next, the first conductor portion 6 of this embodiment will be described. As illustrated in Fig. 1 to Fig. 3, the first conductor portion 6 is in the shape of a straight line and is formed so as to have a substantially constant height in the first extending direction. The plurality of first conductor portions 6 intersect with each other, and thus, the reticular shape described above is formed. The first conductor portion 6 may be in a curve shape, a horseshoe shape, a zigzag line shape or the like, as long as the first conductor line 6 linearly extends. The width of the first conductor portion 6 may be changed along the first extending direction.

The width of the first conductor portion 6 (the maximum width) is preferably 50 nm to 1000 $\mu$m, is more preferably 500 nm to 150 $\mu$m, is even more preferably 1 $\mu$m to 10 $\mu$m, and is still more preferably 1 $\mu$m to 5 $\mu$m. A height $T_1$ of the first conductor portion 6 is preferably 50 nm to 3000 $\mu$m, is more preferably 500 nm to 450 $\mu$m, and is even more preferably 500 nm to 10 $\mu$m. The height $T_1$ of the first conductor portion 6 is greater than a height $T_3$ of the first convex portion 52. Although it is not particularly limited, it is preferable that an aspect ratio of the first conductor portion 6 (a ratio between the width of the first conductor portion 6 and the height of the first conductor portion 6) is greater than 1, in terms of making conductivity and visibility compatible. The height of the first conductor portion 6 is a distance between the first conductor portion contact surface 61 (an average surface) and a first conductor portion top surface 62 (described below) along a Z direction.

The first conductor portion 6 includes: a binder resin; and conductive particles (a conductive powder) dispersed in the binder resin. A metal material such as silver, copper, nickel, tin, bismuth, zinc, indium and palladium, and a carbon-based material such a graphite, carbon black (furnace black, acetylene black, and ketchen black), a carbon nanotube, and a carbon nanofiber can be exemplified as the conductive particles. A metal salt which is a salt of the metal-based material described above may be used instead of the conductive particles.

For example, conductive particles having a particle diameter $\phi$ of greater than or equal to 0.5 $\mu$m and less than or equal to 2 $\mu$m (0.5 $\mu$m $\le \phi \le$ 2 $\mu$m) can be used as the conductive particles contained in the first conductor portion 6, according to the width of the first conductor portion 6 to be formed. It is preferable to use conductive particles having an average particle diameter $\phi$ of less than or equal to half of the width of the first conductor portion 6 to be formed, in terms of stabilizing an electrical resistance value of the first conductor portion 6. It is preferable to use particles having a specific surface area of greater than or equal to 20 m$^2$/g, which is measured by a BET method, as the conductive particles.

In a case where the first conductor portion 6 requires a comparatively small electrical resistance value which is less than or equal to a certain value, it is preferable that a metal material is used as the conductive particles. On the other hand, in a case where the first conductor portion 6 allows a comparatively large electrical resistance value which is greater than or equal to a certain value, it is possible to use a carbon-based material as the conductive particles. It is preferable that the carbon-based material is used as the conductive particles, in terms of improving a haze or total light reflectance of a mesh film.

As with this embodiment, in a case where the first electrode 67 is in a reticular shape and light transmittance is given to the first electrode 67, a conductive material which has excellent conductivity but is opaque (an opaque metal material and an opaque carbon-based material), such as a metal material such as silver, copper and nickel, and the carbon-based material described above can be used as a conductive material of which the first conductor portion 6 of the first electrode 67 is made.

An acrylic resin, a polyester resin, an epoxy resin, a vinyl resin, a urethane resin, a phenolic resin, a polyimide resin, a silicone resin, a fluorine resin and the like can be exemplified as the binder resin. The binder resin may be omitted from the material of which the first conductor portion 6 is made.

The first conductor portion 6 is formed by being coated with a conductive paste and by curing the conductive paste. A conductive paste which is made by mixing conductive particles, a binder resin, water or a solvent, and various additives can be exemplified as a specific example of the conductive paste. $\alpha$-Terpineol, butyl carbitol acetate, butyl carbitol, 1-decanol, butyl cellosolve, diethylene glycol monoethyl ether acetate, tetradecane and the like can be exemplified as the solvent contained in the conductive paste.

As illustrated in Fig. 4, Fig. 6, and Fig. 7, the first conductor portion 6 includes the first conductor portion contact surface 61, the first conductor portion top surface 62, a first conductor portion side surface 63, a first conductor portion end surface 64 and a first protruding portion 65. The "first conductor portion contact surface 61" in this embodiment corresponds to an example of the "contact surface" in the present invention, the "first conductor portion top surface 62" in this embodiment corresponds to an example of the "top surface" in the present invention, the "first conductor portion end surface 64" in this embodiment corresponds to an example of the "first end surface" in the present invention, and the "first protruding portion 65" in this embodiment corresponds to an example of the "protruding portion" in the present invention.

As illustrated in Fig. 4 and Fig. 6, the first conductor portion contact surface 61 is a surface which is in contact with the first resin portion contact surface 521 and extends in parallel with the first extending direction. The first conductor portion contact surface 61 is in an unevenness shape. The unevenness shape is formed on the basis of surface roughness of the first conductor portion contact surface 61. The surface roughness of the first conductor portion contact surface 61 will be described below in detail.

As illustrated in Fig. 4 and Fig. 6, the first conductor portion top surface 62 is a surface on a side opposite to the first conductor portion contact surface 61 in the first conductor portion 6 and extends in parallel with the first extending direction. The first conductor portion top surface 62 of this embodiment includes a first top surface flat portion 621 which is linear. The width of the first top surface flat portion 621 is greater than or equal to half of the width of the first conductor portion top surface 62 in the width direction cross section of the first conductor portion 6. In this embodiment, a portion excluding the circumference of the first conductor portion top surface 62 is the first top surface flat portion 621. A flatness of the first top surface flat portion 621 is less than or equal to 0.5 $\mu$m. The flatness can be defined by a JIS method (JIS B0621 (1984)).

The flatness of the first top surface flat portion 621 is obtained by a non-contact type measurement method using laser light. Specifically, a measurement target is irradiated with strip-like laser light, and an image is formed on an imaging device (for example, a two-dimensional CMOS) by reflection light thereof, and thus, the flatness is measured. As a calculation method of the flatness, a method in which a plane passing through three points maximally separated from each other is set in a target surface, and a maximum value of a deviation thereof is calculated as the flatness (a maximum deflection flatness) is used. The measurement method or the calculation method of the flatness is not particularly limited to the above description. For example, the measurement method of the flatness may be a contact type measurement method using a dial gauge or the like. As the calculation method of the flatness, a method in which a value of a gap formed at the time of interposing a target surface between parallel planes is calculated as the flatness (a maximum inclination type flatness) may be used.

In this embodiment, as illustrated in Fig. 4 and Fig. 6, the first protruding portion 65 is continuously formed along the circumference of the first conductor portion top surface 62. The first protruding portion 65 protrudes towards a side separated from the first resin portion 5. In a portion where the first conductor portions 6 intersect with each other, the first protruding portion 65 is continuously formed. In the width direction cross section of the first conductor portion, the first protruding portion 65 exists on both ends of the first conductor portion top surface 62, and the first top surface flat portion 621 is formed and between the first protruding portions 65 and 65. The first protruding portion 65 and the first top surface flat portion 621 are continuously connected to each other in the width direction cross section of the first conductor portion 6. It is preferable that the height of the first protruding portion 65 (the height of the first protruding portion 65 from the first conductor portion top surface 62) is 0.1 $\mu$m to 1.0 $\mu$m. It is preferable that the width of the first protruding portion 65 (a distance between both ends of the first protruding portion 65 positioned on a first virtual straight line $L_1$ extending on the first conductor portion top surface 62 (the first top surface flat portion 621)) is 0.1 $\mu$m to 1.0 $\mu$m.

As illustrated in Fig. 4 and Fig. 6, the first conductor portion side surface 63 is interposed between the first conductor portion contact surface 61 and the first conductor portion top surface 62. In the width direction cross section of the first conductor portion, the first conductor portion side surface 63 is connected to the first conductor portion top surface 62 at a first side surface upper end 631 through the first protruding portion 65 and is connected to the first conductor portion contact surface 61 at a first side surface lower end 632. The first side surface upper end 631 corresponds to a portion in which the first virtual straight line $L_1$ and a second virtual straight line $L_2$ extending on the first conductor portion side surface 63 (a first side surface flat portion 633 (described below)) intersect with each other in the width direction cross section of the first conductor portion 6.

The first conductor portion side surface 63 and a side surface of the first convex portion 52 are continuously connected to each other and form one surface. Two first conductor portion side surfaces 63 and 63 in one first conductor portion 6 are inclined to be close to the center of the first conductor portion 6 as being separated from the first resin portion 5. In this case, the first conductor portion 6 is in a tapered shape in which the first conductor portion 6 is narrowed as being separated from the first resin portion 5 in the width direction cross section of the first conductor portion 6.

The first conductor portion side surface 63 includes the first side surface flat portion 633 which is linear and extends between the first side surface upper end 631 and the first side surface lower end 632 in the width direction cross section of the first conductor portion 6. A flatness of the first side surface flat portion 633 is less than or equal to 0.5 μm. In this embodiment, an approximately entire of the first conductor portion side surface 63 is the first side surface flat portion 633.

An angle $\theta_1$ between the first conductor portion side surface 63 and the first conductor portion top surface 62 is preferably 90° to 170° ($90° \leq \theta_1 \leq 170°$), is more preferably 90° to 135° ($90° \leq \theta_1 \leq 135°$), and is even more preferably 90° to 120° ($90° \leq \theta_1 \leq 120°$), in terms of suppressing scattering of light on the first conductor portion side surface 63. In this embodiment, an angle between one first conductor portion side surface 63 and the first conductor portion top surface 62, and an angle between the other first conductor portion side surface 63 and the first conductor portion top surface 62 are substantially equal to each other in one first conductor portion 6. The angle $\theta_1$ indicates an angle between the first virtual straight line $L_1$ and the second virtual straight line $L_2$.

As illustrated in Fig. 3, Fig. 6, and Fig. 7, the first conductor portion end surface 64 extending in a direction intersecting with the first extending direction is formed at a tip end of the first conductor portion 6 in the first extending direction. The first conductor portion end surface 64 may be formed at both tip ends of the first conductor portion 6, or may be formed at only one tip end.

As illustrated in Fig. 6 and Fig. 7, the first conductor portion end surface 64 is connected to the first conductor portion top surface 62 at a first end surface upper end 641 through the first protruding portion 65 and is connected to the first conductor portion contact surface 61 at a first end surface lower end 642. The first end surface upper end 641 corresponds to a portion in which a third virtual straight line $L_3$ extending on the first conductor portion top surface 62 (the first top surface flat portion 621) and a fourth virtual straight line $L_4$ extending on the first conductor portion end surface 64 intersect with each other in the first extending direction cross section of the first conductor portion 6. The first end surface lower end 642 protrudes to the outside of the first conductor portion 6 with respect to the first end surface upper end 641 in the first extending direction cross section of the first conductor portion 6, and thus, the first conductor portion end surface 64 is an inclined surface which is inclined in a straight line shape between the first end surface upper end 641 and the first end surface lower end 642. The first conductor portion end surface 64 is continuously connected to the convex portion end surface 522 of the first convex portion 52, and the first conductor portion end surface 64 and the convex portion end surface 522 form one surface in the wiring body 4. An angle $\theta_2$ between the first conductor portion end surface 64 and the first conductor portion top surface 62 is 90° to 135° ($90° \leq \theta_2 \leq 135°$), and is preferably 90° to 120° ($90° \leq \theta_2 \leq 120°$). The angle $\theta_2$ is an angle between the third virtual straight line $L_3$ and the fourth virtual straight line $L_4$.

A length $W_1$ obtained by projecting the first conductor portion end surface 64 on a plane parallel to the first extending direction (hereinafter, also referred to as a "first length $W_1$") and the height $T_1$ of the first conductor portion 6 satisfy a relationship of Expression (6). For this reason, in this embodiment, the tip end of the first conductor portion 6 has a precipitous shape in the Z direction with respect to the first upper surface 511 of the first flat portion 51.

$$W_1/T_1 \leq 1 \ldots(6)$$

In this embodiment, in a case of viewing the first extending direction cross section of the first conductor portion 6, the first length $W_1$ corresponds to a distance between the first end surface upper end 641 and the first end surface lower end 642 in the first extending direction.

The first conductor portion end surface 64 includes first arc portions 643 and 643 respectively connected to the first conductor portion side surfaces 63 and 63. The first arc portion 643 is curved towards the outside of the first conductor portion 6. A portion of the first conductor portion end surface 64 between the first arc portions 643 and 643 is approximately flat. In this case, the first conductor portion end surface 64 has a semi-oval shape in the plan view. The first arc portions 643 and 643 are directly connected to each other. In this case, although it is not particularly illustrated, the first conductor portion end surface 64 has a semi-circular shape in the plan view. In the "first arc portion 643" in this embodiment corresponds to an example of the "arc portion" in the present invention.

A relationship between the first length $W_1$ and a length $W_2$ obtained by projecting the first conductor portion side surface 63 on a plane parallel to the width direction of the first conductor portion 6 (hereinafter, also referred to as a "second length $W_2$", refer to Fig. 4) satisfies a relationship of Expression (7) described below. For this reason, a side portion of the first conductor portion 6 has a precipitous shape in the Z direction with respect to the first upper surface 511 of the first flat portion 51, as with the tip end of the first conductor portion 6. In this case, the angle $\theta_1$ and the angle $\theta_2$ are substantially equal to each other.

$$W_1 = W_2 \ldots (7)$$

In this embodiment, in a case of viewing the width direction cross section of the first conductor portion 6, the second length $W_2$ corresponds to a distance between the first side surface upper end 631 and the first side surface lower end 632 in the width direction of the first conductor portion 6.

The fact that the angle $\theta_1$ and the angle $\theta_2$ are substantially equal to each other indicates a case where a ratio between the first length $W_1$ and the second length $W_2$ satisfies a relationship of Expression (8) described below.

$$0.95 \leq W_1/W_2 \leq 1.05 \ldots (8)$$

In this embodiment, a relationship between a sum $W_5$ of the first length $W_1$ and a length obtained by projecting the convex portion end surface 522 on the plane parallel to the first extending direction, and a sum $T_2$ of the height $T_1$ of the first conductor portion 6 and the height $T_3$ of the first convex portion 52 satisfies Expression (9) described below.

$$W_5/T_2 \leq 1 \ldots (9)$$

As illustrated in Fig. 4, it is preferable that the surface roughness of the first conductor portion contact surface 61 is relatively greater than surface roughness of the first conductor portion top surface 62, in terms of rigidly fixing the first conductor portion 6 to the first resin portion 5 while improving visibility of the wiring body. In this embodiment, since the first conductor portion top surface 62 includes the first top surface flat portion 621, a relative relationship of the surface roughness in the first conductor portion 6 described above (a relationship in which the surface roughness of the first conductor portion top surface 62 is relatively greater than the surface roughness of the first conductor portion contact surface 61) is established. Specifically, it is preferable that surface roughness Ra of the first conductor portion contact surface 61 is 0.1 μm to 3 μm, whereas surface roughness Ra of the first conductor portion top surface 62 is 0.001 μm to 1.0 μm. It is more preferable that the surface roughness Ra of the first conductor portion contact surface 61 is 0.1 μm to 0.5 μm, and it is more preferable that the surface roughness Ra of the first conductor portion top surface 62 is 0.001 μm to 0.3 μm. A relationship of the surface roughness of the first conductor portion top surface 62 with respect to the surface roughness of the first conductor portion contact surface 61 is preferably greater than or equal to 0.01 and less than 1, and is more preferably greater than or equal to 0.1 and less than 1. It is preferable that the surface roughness of the first conductor portion top surface 62 is less than or equal to 1/5 of the width of the first conductor portion 6 (the maximum width). Such surface roughness can be measured by a JIS method (JIS B0601 (revised on March 21, 2013)). The surface roughness of the first conductor portion contact surface 61 and the surface roughness of the first conductor portion top surface 62 may be measured along the width direction of the first conductor portion 6, or may be measured along the extending direction of the first conductor portion 6.

Incidentally, as described in the JIS method (JIS B0601 (revised on March 21, 2013)), the "surface roughness Ra" indicates "arithmetic average roughness Ra". The "arithmetic average roughness Ra" indicates a roughness parameter which is obtained by blocking a long wavelength component (a waviness component) from a sectional curve. The waviness component is separated from the sectional curve on the basis of a measurement condition necessary for obtaining a feature (for example, a dimension or the like of the target).

In this embodiment, the first conductor portion side surface 63 also includes the first side surface flat portion 633. For this reason, as with the first conductor portion top surface 62, the surface roughness of the first conductor portion contact surface 61 is relatively greater than the surface roughness of the first conductor portion side surface 63. The surface roughness Ra of the first conductor portion contact surface 61 is 0.1 μm to 3 μm, whereas surface roughness Ra of the first conductor portion side surface 63 is preferably 0.001 μm to 1.0 μm, and is more preferably 0.001 μm to 0.3 μm. The surface roughness of the first conductor portion side surface 63 may be measured along the width direction of the first conductor portion 6, or may be measured along the extending direction of the first conductor portion 6.

In this embodiment, the surface roughness of the first conductor portion contact surface 61 is relatively greater than the surface roughness of the first conductor portion end surface 64. In this case, the surface roughness Ra of the first conductor portion contact surface 61 is 0.1 μm to 3 μm, whereas surface roughness Ra of the first conductor portion end surface 64 is preferably 0.001 μm to 1.0 μm, and is more preferably 0.001 μm to 0.3 μm. The surface roughness of the first conductor portion end surface 64 may be measured along the width direction of the first conductor portion 6, or may be measured along the extending direction of the first conductor portion 6.

In a case where a relative relationship in the surface roughness between the first conductor portion contact surface 61 and a surface other than the first conductor portion contact surface 61 (the first conductor portion top surface 62, the first conductor portion side surface 63, and the first conductor portion end surface 64) satisfies the relationship described above, a diffused reflection rate on the surface side other than the first conductor portion contact surface 61 is less than a diffused reflection rate on the first conductor portion contact surface 61 side. In this case, a ratio of the diffused reflection rate on the surface side other than the first conductor portion contact surface 61 to the diffused reflection rate on the first conductor portion contact surface 61 side is preferably greater than or equal to 0.1 and less than 1, and is more preferably greater than or equal to 0.3 and less than 1.

An example of the shape of the first conductor portion having the described above relative relationship in the surface roughness between the first conductor portion contact surface and the surface other than the first conductor portion contact surface will be described with reference to Fig. 5. In Fig. 5, in order to describe a first conductor portion 6B to be easily understood, the second resin portion 7 is not illustrated. At a first conductor portion contact surface 61B of the first conductor portion 6B made of conductive particles M and a binder resin B, a part of the conductive particles M protrudes from the binder resin B in a width direction cross section of the first conductor portion 6B. Accordingly, the first conductor portion contact surface 61B has an unevenness shape. On the other hand, at a first conductor portion top surface 62B and a first conductor portion side surface 63B, the binder resin B enters between the conductive particles M in the width direction cross section of the first conductor portion 6B. A slightly exposed portion of the conductive particles M is scattered on the first conductor portion top surface 62B and the first conductor portion side surface 63B, but the binder resin B covers the conductive particles M. Accordingly, the first conductor portion top surface 62B includes a first top surface flat portion 621B, and the first conductor portion side surface 63B includes a first side surface flat portion 633B. Although it is not illustrated in Fig. 5, as with the first conductor portion top surface 62B and the first conductor portion side surface 63B, the binder resin B enters between the conductive particles M at the first conductor portion end surface. In this case, surface roughness of the first conductor portion contact surface 61B is relatively greater than surface roughness of the first conductor portion top surface 62B, is relatively greater than surface roughness of the first conductor portion side surface 63B, and is relatively greater than the surface roughness of the first conductor portion end surface. The binder resin B covers the conductive particles M at the first conductor portion side surface 63B and the first conductor portion end surface, and thus, electrical insulating properties between the adjacent first conductor portions 6B are improved, and the occurrence of migration is suppressed.

The shape of the first conductor portion is not limited to the above description. In the first conductor pattern 66, the first conductor portion 6 configuring the first electrode 67, the first conductor portion 6 configuring the first lead-out wiring 68, and the first conductor portion 6 configuring the first terminal 69 may be in the same shape, or may be in different shapes. For example, the width of the first conductor portion 6 configuring the first electrode 67, the width of the first conductor portion 6 configuring the first lead-out wiring 68, and the width of the first conductor portion 6 configuring the first terminal 69 may be equal to each other, or may be different from each other. The height of the first conductor portion 6 configuring the first electrode 67, the height of the first conductor portion 6 configuring the first lead-out wiring 68, and the height of the first conductor portion 6 configuring the first terminal 69 may be equal to each other, or may be different from each other.

As illustrated in Fig. 7, the second resin portion 7 is disposed to cover the first conductor portion 6 and is interposed between the first and second conductor portions 6 and 8. In this embodiment, the second resin portion 7 functions as a dielectric body which exists between two electrodes 67 and 87 of the touch sensor 1. The thickness of the second resin portion 7 is adjusted, and thus, a detection sensitivity of the touch sensor 1 is adjusted.

The second resin portion 7 includes a second flat portion 71 which is formed in the shape of a layer and a second convex portion 72. The second flat portion 71 directly covers the first conductor portion 6 and directly covers the first upper surface 511 of the first resin portion 5. The first terminal 69 is exposed from a rectangular cutout formed on one side of the second flat portion 71 (refer to Fig. 1 and Fig. 2). A second upper surface 711 of the second flat portion 71 is approximately flat. It is preferable that the thickness of the second flat portion 71, for example, is 20 $\mu$m to 200 $\mu$m.

The second convex portion 72 is provided on the second flat portion 71 and is integrally formed with the second flat portion 71. The second convex portion 72 is disposed corresponding to the second conductor portion 8 and supports the second conductor portion 8. The second convex portion 72 protrudes towards the second flat portion 71 side from the second conductor portion 8 in a width direction cross section of the second conductor portion 8.

The second convex portion 72 includes a second resin portion contact surface 721 which is in contact with the second conductor portion 8 (specifically, a second conductor portion contact surface 81). As with the first resin portion contact surface 521, the second resin portion contact surface 721 has an unevenness shape which is complementary with respect to an unevenness shape of the second conductor portion contact surface 81. As illustrated in Fig. 7, the second resin portion contact surface 721 and the second conductor portion contact surface 81 have also a complementary unevenness shape in a cross section of the second conductor portion 8 along the extending direction of the second conductor portion 8. In Fig. 7, in order to describe the wiring body 4 of this embodiment to be easily understood, the unevenness shape of the second resin portion contact surface 721 and the second conductor portion contact surface 81 is exaggerated.

As illustrated in Fig. 1 and Fig. 2, a plurality of second conductor portions 8 are disposed on the second resin portion 7, and a second conductor pattern 86 is configured of the plurality of second conductor portions 8. The second conductor pattern 86 includes the second electrode 87, a second lead-out wiring 88 and a second terminal 89.

The second electrode 87 is formed of the plurality of second conductor portions 8 into the shape of a reticulation. As with the first electrode 67, the second electrode 87 includes: second wide portions 871 in a diamond shape; and second joining portions 872 each of which connects the second wide portions 871 with each other. In one second electrode 87, the second wide portions 871 are arranged along the Y direction at substantially regular intervals, and the corners of the adjacent second wide portions 871 are connected to each other by the second joining portion 872. In Fig. 1, in order to describe the second electrode 87 to be easily understood, the second wide portion 871 is illustrated by four sides which are in the shape of a straight line, but as illustrated in the partially enlarged view of Fig. 1, in actual fact, tip ends of the second conductor portions 8 protrude into the shape of a comb on each side of the second wide portion 871. The shape of the second wide portion 871 is not particularly limited to a diamond shape.

The plurality of second electrode 87 are parallel in the X direction in the drawing. Each of the second lead-out wirings 88 is connected to one longitudinal direction end of each of the second electrodes 87. Each of the second lead-out wirings 88 extends from one longitudinal direction end of each of the second electrodes 87 to the vicinity of the outer edge of the wiring body 4. Each of the second terminals 89 is disposed on the other end of each of the second lead-out wirings 88. The second terminal 89 is electrically connected to an external circuit (not illustrated).

The same shape as the shape of each reticulation configuring the reticular shape of the first electrode 67 can be adopted as the shape of each reticulation configuring the reticular shape of the second electrode 87. As with the second electrode 87, the second lead-out wiring 88 or the second terminal 89 may be in a reticular shape.

The second conductor portion 8 of this embodiment has the same basic configuration as that of the first conductor portion 6 described above. Therefore, the width of the second conductor portion 8 is substantially equal to the width of the first conductor portion 6, and the height of the second conductor portion 8 is substantially equal to the height of the first conductor portion 6. Herein, concerning the second conductor portion 8, in order to omit the repeated description, the first conductor portion 6 will be replaced with the second conductor portion 8, the first conductor portion contact surface 61 will be replaced with the second conductor portion contact surface 81, the first conductor portion top surface 62 will be replaced with a second conductor portion top surface 82, the first conductor portion side surface 63 will be replaced with a second conductor portion side surface 83, the first top surface flat portion 621 will be replaced with a second top surface flat portion 821, the first side surface upper end 631 will be replaced with a second side surface upper end 831, the first side surface lower end 632 will be replaced with a second side surface lower end 832, the first side surface flat portion 633 will be replaced with a second side surface flat portion 833, the first conductor portion end surface 64 will be replaced with a second conductor portion end surface 84, the first end surface upper end 641 will be replaced with a second end surface upper end 841, the first end surface lower end 642 will be replaced with a second end surface lower end 842, the first arc portion 643 will be replaced with a second arc portion 843, and the description of the first conductor portion 6 will be quoted.

In order to ensure the visibility of the display device described above, components other than the first and second conductor portions 6 and 8 configuring the wiring board 2 are made of a material having transparency (light transmittance) as a whole. For this reason, the first and second conductor patterns 66 and 86 are disposed by being separated from each other by the thickness of the second resin portion 7 in the Z direction, but in a case of viewing the wiring board 2 from the plane surface, the first and second electrodes 67 and 87 are combined with each other, and thus, an integrated electrode pattern described below is formed on appearance. That is, as illustrated in Fig. 1, in a see-through (transmissive) plan view (a plan view in a case of transmissively viewing the wiring board 2 from the upper side or the lower side (in a normal direction of the wiring board 2)), the second wide portion 871 is disposed to correspond to a region which is defined by the first wide portions 671, the first and second wide portions 671 and 871 are disposed not to overlap with each other, but the first joining portion 672 and second joining portion 872 intersect with each other to overlap with each other. A Side of the first wide portion 671 and a side of the second wide portion 871 adjacent to the first wide portion 671 face each other in the see-through plan view.

In this case, as illustrated in Fig. 3, the first conductor portion 6 whose the tip end protrudes from the side of the first wide portion 671 and the second conductor portion 8 whose the tip end protrudes from the side of the second wide portion 871 facing the side of the first wide portion 671 are positioned on the same fifth virtual straight line $L_5$ in the see-through plan view. In this case, the first extending direction and an extending direction of the second conductor portion 8 (hereinafter, also referred to as a "second extending direction") substantially match with each other. The first and second conductor portions end surfaces 64 and 84 are disposed to face each other without overlapping with each other in the see-through plan view. In this embodiment, the first and second conductor portions end surfaces 64 and 84 are slightly separated from each other, but the first and second conductor portions 6 and 8 form one continuous straight line on appearance.

As illustrated in Fig. 7, the first and second conductor portions 6 and 8 satisfy a relationship of Expression (10) and Expression (11) described below, in terms of improving the visibility of the wiring body 4.

$$(W_4 - W_3) \times 0.5/T_1 \leq 1 \ldots (10)$$

$$W_3 < 50 \ \mu m \ldots (11)$$

Here, in Expression (10) and Expression (11) described above, $W_3$ is a length which is the shortest length (hereinafter, also referred to as a "third length") of lengths obtained by projecting an interval between the first and second conductor portions end surfaces 64 and 84 on a plane parallel to an extending direction of the fifth virtual straight line $L_5$ (hereinafter, also referred to as a "third extending direction"), and $W_4$ is a length which is the longest length (hereinafter, also referred to as a "fourth length") of the lengths obtained by projecting the interval between the first and second conductor portions end surfaces 64 and 84 on the plane parallel to the third extending direction. In this embodiment, in a case of viewing a cross section of the first and second conductor portions 6 and 8 along the third extending direction, the third length $W_3$ corresponds to a distance between the first end surface lower end 642 and the second end surface lower end 842 in the third extending direction (refer to Fig. 7). In a case of viewing the sectional surface of the first and second conductor portions 6 and 8 along the third extending direction, the fourth length $W_4$ corresponds to a distance between the first end surface upper end 641 and the second end surface upper end 841 in the third extending direction (refer to Fig. 7).

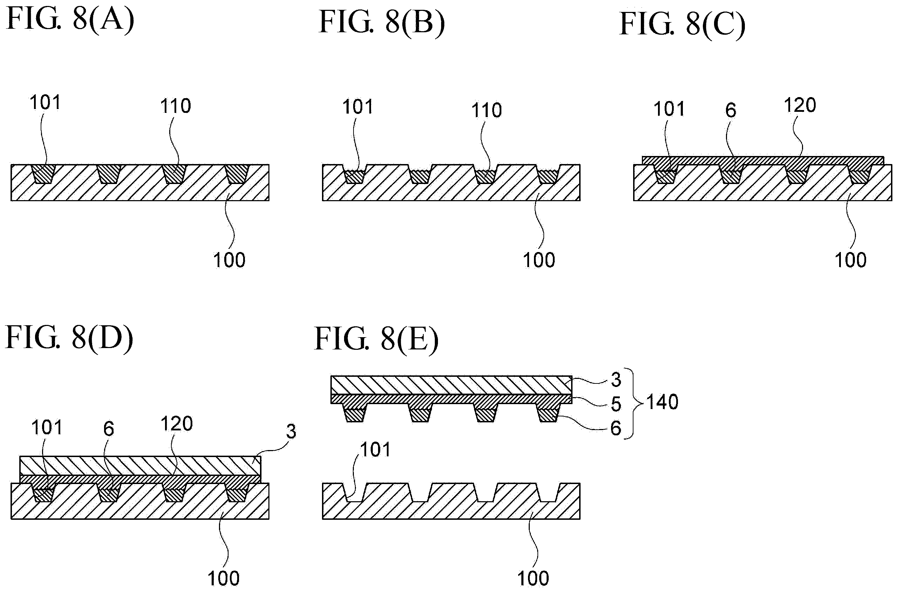

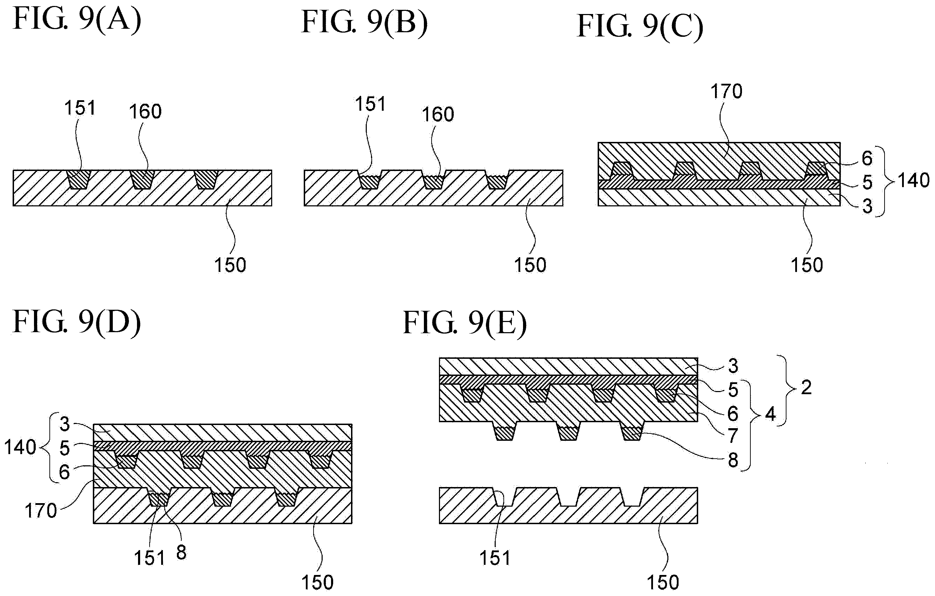

Next, a manufacturing method of the wiring body 4 of this embodiment will be described. Fig. 8(A) to Fig. 8(E), and Fig. 9(A) to Fig. 9(E) are cross-sectional views for illustrating a manufacturing method of a wiring body in one embodiment of the present invention.

First, as illustrated in Fig. 8(A), a first intaglio 100 on which a concave portion 101 having a shape corresponding to the shape of the first conductor portion 6 is formed is filled with a first conductive material 110. The conductive paste described above is used as the first conductive material 110 filling the concave portion 101 of the first intaglio 100. Silicon, nickel, glasses such as silicon dioxide, ceramics, organic silicas, glassy carbon, a thermoplastic resin, a photocurable resin and the like can be exemplified as a material of which an intaglio 11 is made. It is preferable that a release layer made of a black lead-based material, a silicone-based material, a fluorine-based material, a ceramic-based material, an aluminum-based material or the like is formed on a surface of the concave portion 101 in order to improve releasability.

For example, a dispense method, an ink jet method, or a screen printing method can be exemplified as a method of filling the concave portion 101 of the first intaglio 100 with the first conductive material 110. Alternatively, a method of wiping, scraping, sucking, sticking, rinsing or blowing the first conductive material 110 which is applied to a portion other than the concave portion 101 after performing coating by a slit coating method, a bar coating method, a blade coating method, a dip coating method, a spray coating method, or a spin coating method can be exemplified. The filling method can be suitably used according to the composition of the conductive material 110, the shape of the first intaglio 100 or the like.

Next, as illustrated in Fig. 8(B), the first conductive material 110 filling the concave portion 101 is heated and cured. A heating condition of the first conductive material 110 can be suitably set according to the composition of the first conductive material 110 or the like.

Here, the volume of first conductive material 110 shrinks with a heating treatment. At this time, a shape of an inner wall surface of the concave portion 101 is transferred to a portion of the first conductive material 110 which is in contact with the inner wall surface of the concave portion 101, and thus, the portion is in a flat shape. On the other hand, a portion of the first conductive material 110 which is not in contact with the inner wall surface of the concave portion 101 is not affected by the shape of the inner wall surface of the concave portion 101. For this reason, a fine unevenness shape is formed in the portion of the first conductive material which is not in contact with the inner wall surface of the concave portion 101. Accordingly, the first conductor portion 6 is formed.

A treatment method of the first conductive material 110 is not particularly limited to heating. The first conductive material 110 may be irradiated with an energy ray such as an infrared ray, an ultraviolet ray or laser light, or the first conductive material 110 may only be dried. Two or more types of treatment methods may be combined.

Next, as illustrated in Fig. 8(C), a first resin material 120 for forming the first resin portion 5 is applied onto the first intaglio 100. The resin material described above configuring the first resin portion 5 is used as the first resin material 120. A screen printing method, a spray coating method, a bar coating method, a dipping method and an ink jet method can be exemplified as a method of applying the first resin material 120 on the first intaglio 100. According to such coating, the first resin material 120 enters the concave portion 101 having a gap which is generated by the volume contraction of the first conductive material 110 described above.

Next, as illustrated in Fig. 8(D), the substrate 3 is disposed on the first intaglio 100, and the substrate 3 is pressed against the first intaglio 100 in a state where the first resin material 120 is interposed between the substrate 3 and the first intaglio 100. Then, the first resin material 120 is cured. Irradiation of an energy ray such as an ultraviolet ray laser light or an infrared ray laser light, heating, heating and cooling, drying and the like can be exemplified as a method of curing the first resin material 120. Accordingly, the first resin portion 5 is formed.

A formation method of the first resin portion 5 is not particularly limited to the above description. For example, the first resin portion 5 may be formed by preparing the substrate 3 on which the first resin material 120 is approximately uniformly applied 3, pressing the substrate 3 against the first intaglio 100 so that the first resin material 120 enters the concave portion 101 of the first intaglio 100, and curing the first resin material 120 while maintaining such a state.

Next, as illustrated in Fig. 8(E), an intermediate 140 including the substrate 3, the first conductor portion 6 and the first resin portion 5 is released from the first intaglio 100.

Next, as illustrated in Fig. 9(A), a second intaglio 150 on which a concave portion 151 corresponding to the shape of the second conductor portion 8 is formed is prepared. The same material as the material of which the first intaglio 100 is made is used as a material of which the second intaglio 150 is made. As with the first intaglio 100, a release layer (not illustrated) may be formed on the surface of the second intaglio 150 in advance.

Next, as illustrated in Fig. 9(B), the second concave portion 151 of the second intaglio 150 is filled with a second conductive material 160 for forming the second conductor portion 8, and the second conductive material 160 is cured. The conductive paste described above is used as the second conductive material 160. The same method as the method of filling the concave portion 101 with the first conductive material is used as a method of filling the second concave portion 151 with the second conductive material 160. The same method as the method of curing the first conductive material 110 is used as a method of curing the second conductive material 160.

Next, as illustrated in Fig. 9(C), a second resin material 170 for forming the second resin portion 7 is applied on the intermediate 140 so as to cover the first conductor portion 6. The material of which the second resin portion 7 is made is used as the second resin material 170. It is preferable that a viscosity of the second resin material 170 is 1 mPa·s to 10,000 mPa·s, in terms of ensuring sufficient fluidity at the time of coating. It is preferable that a storage elastic modulus of the resin after being cured is greater than or equal to $10^6$ Pa and less than or equal to $10^9$ Pa, in terms of durability of the first conductor portion 6 or the second conductor portion 8. The same method as the method of applying the first resin material is used as a method of applying the second resin material 170.

Next, as illustrated in Fig. 9(D), the intermediate 140 is disposed on the second intaglio 150, and the intermediate 140 is pressed against the second intaglio 150 so that the second resin material 170 enters the second concave portion 151 of the second intaglio 150 (specifically, an air gap which is generated by the volume contraction of the second conductive material 160), and the second resin material 170 is cured. A pressure force at the time of pressing the intermediate 140 against the second intaglio 150 is preferably 0.001 MPa to 100 MPa, and is more preferably 0.01 MPa to 10 MPa. The pressure can be performed by using a pressure roller or the like. The same method as the method of curing the first resin material 120 is used as a method of curing the second resin material 170. Accordingly, the second resin portion 7 is formed, and the intermediate 140 and the second conductor portion 8 are adhesively fixed to each other through the second resin portion 7.

Next, as illustrated in Fig. 9(E), the intermediate 140, the second resin portion 7 and the second conductor portion 8 are released from the second intaglio 150. Accordingly, the wiring board 2 can be obtained.

The wiring body 4, the wiring board 2 and the touch sensor 1 of this embodiment have the following effects.

In the touch panel sensor, a technology of configuring the electrode pattern of a plurality of metal thin wires is known. In the touch panel sensor, an area obtained by projecting the metal thin wire on a surface direction of the touch panel sensor is small, and thus, the metal thin wire is hardly visible, and visibility of the touch panel sensor is improved. However, in a process where the metal thin wire is formed, a conductive material may wet-spread due to the own weight or the like after the conductive material configuring the metal thin wire is formed on a substrate and before a curing treatment is performed, and thus, a tip end of the metal thin wire may be in a flared shape. In this case, the area obtained by projecting the metal thin wire on the surface direction of the touch panel increases, the metal thin wire is easily visible, and thus, the visibility of the touch panel sensor decreases. In addition, light incident from a direction orthogonal to the surface direction of the touch panel sensor scatters on the flared portion of such a metal thin wire, and thus, there is a concern that an increase in a haze is caused. For this reason, a display region is clouded, and thus, there is a concern that the visibility of the touch panel sensor decreases. In addition, the tip end of the metal thin wire is in a sharp shape (a pointed shape), and thus, an electrical field intensity increases, and insulation breakdown due to an electrical field concentration (a so-called edge effect) easily occurs at the tip end. For this reason, in a case where the metal thin wires are disposed to be close to each other, there is a concern that such metal thin wires short-circuit. On the other hand, in a case of setting a safety margin more than necessary in order to prevent a short circuit between the metal thin wires, a reduction in the size of the touch panel sensor is hindered.

In addition, as the projection electrostatic capacitance type touch panel sensor, it is known that two electrode patterns are disposed to intersect with each other in the see-through plan view and the combination pattern is formed in order to prevent degradation in visibility. In such a touch panel sensor, since it is necessary that one electrode pattern is disposed corresponding to the other electrode pattern, a high positional accuracy is required between two electrode patterns. In general, positioning between the electrode patterns is performed by an image processing on the basis of a boundary portion of the metal thin wires configuring the electrode pattern. For this reason, as described above, in a case where a dimensional accuracy of the metal thin wire is impaired, it is not possible to accurately recognize the boundary portion of the metal thin wires, and when two electrode patterns stack on each other, a decrease in the positional accuracy is caused between the electrode patterns.

In contrast, in this embodiment, the tip end of the first conductor portion 6 is not in a flared shape. Specifically, the relationship of Expression (6) described above is established, and the tip end of the first conductor portion 6 has a precipitous shape in the Z direction with respect to the first upper surface 511 of the first flat portion 51. For this reason, in the plan view, the area of the first conductor portion 6 decreases, and the first conductor portion 6 can be hardly visible. Accordingly, it is possible to improve the visibility of the wiring body 4.

The relationship of Expression (6) described above is established, and thus, the first conductor portion end surface 64 hardly protrudes towards the outside of the first conductor portion 6, and light incident from a direction orthogonal to a surface direction of the wiring body 4 hardly reaches the first conductor portion end surface 64. For this reason, scattering of light is suppressed and the haze can be reduced on a surface of the first conductor portion 6, and thus, it is possible to improve the visibility of the wiring body 4.

The relationship of Expression (6) described above is established, and thus, the tip end of the first conductor portion 6 is not in a sharp-pointed shape. For this reason, it is possible to suppress the occurrence of insulation breakdown due to an edge effect. For this reason, even in a case where the first conductor portions 6 are disposed to be close to each other, it is possible to suppress a short circuit between the first conductor portions 6.

The tip end of the first conductor portion 6 is not in the sharp-pointed shape, and thus, it is not necessary to set a safety margin, or it is possible to decrease the safety margin. Accordingly, it is possible to reduce the size of the wiring body 4.

In this embodiment, the first conductor portion end surface 64 positioned at the tip end of the first conductor portion 6 includes the first arc portion 643. For this reason, it is possible to suppress scattering of light or the like at a portion where the first conductor portion end surface 64 and the first conductor portion side surface 63 are connected to each other. Accordingly, the visibility of the wiring body 4 is further improved.

Here, in a conductor portion having a height of μm order, a stress is easily concentrated on the conductor portion due to the influence of the height, compared to a conductor portion having a height of nm order. In a case where t the conductor portion having a precipitous shape is disposed on a resin portion, a surface direction is greatly changed at a connection portion between the conductor portion and the resin portion, and thus, a stress is easily concentrated on the connection portion between the conductor portion and the resin portion. Accordingly, there is a possibility that a crack or peeling occurs in the connection portion between the conductor portion and the resin portion.

In such a case, in order to support the first conductor portion 6 whose the height $T_1$ is set to be in a range of 500 nm to 10 μm which is μm order, the first convex portion 52 is disposed on the first resin portion 5, the first conductor portion end surface 64 and the convex portion end surface 522 are continuously connected to each other, and the first conductor portion 6 and the first convex portion 52 are formed to satisfy the relationship of Expression (9) described above in this embodiment. Accordingly, a difference is hardly formed at a connection portion between the first conductor portion 6 and the first resin portion 5, and a change of the surface direction is smooth at the connection portion between the first conductor portion 6 and the first resin portion 5, and thus, a stress is hardly concentrated on the connection portion between the first conductor portion 6 and the first resin portion 5. As a result thereof, it is possible to suppress the occurrence of a crack or peeling at the connection portion between the first conductor portion 6 and the first resin portion 5. In particular, in a case where the first conductor portion 6 is configured of the binder resin and the conductive particles, it is possible to improve adhesiveness between the first conductor portion 6 and the first resin portion 5, and to further suppress the occurrence of a crack or peeling at the connection portion between the first conductor portion 6 and the first resin portion 5.

In this embodiment, the first conductor portion end surface 64 and the convex portion end surface 522 are continuously connected to each other, and therefore, a difference is hardly formed in an interface between the first conductor portion 6 and the first resin portion 5, it is possible to suppress scattering of light on the interface between the first conductor portion 6 and the first resin portion 5. The relationship of Expression (9) described above is established, and thus, the convex portion end surface 522 of the first convex portion 52 has a precipitous shape, and in this case, the convex portion end surface 522 extends in a direction intersecting with an electrical field between the adjacent first conductor portions 6, and thus, it is possible to suppress a short circuit between the adjacent first conductor portions 6 due to ion migration.

In this embodiment, the relationship of Expression (7) described above is established, and thus, in the first conductor portion side surface 63, it is possible to obtain the same functions and effects as the functions and the effects described in the first conductor portion end surface 64. Accordingly, it is possible to further improve the visibility of the wiring body 4. The first conductor portion end surface 64 and the first conductor portion side surface 63 can be smoothly connected to each other, and thus, it is possible to suppress scattering of light or the like at the connection portion therebetween.

In this embodiment, the first conductor portion 6 includes the first protruding portion 65 which is along the circumference of the first conductor portion top surface 62, and the first protruding portion 65 protrudes towards a side separated from the first resin portion 5. For this reason, the first protruding portion 65 enters the second resin portion 7, and thus, it is possible to suppress peeling between the first conductor portion 6 and the second resin portion 7. In particular, a stress is most likely to be concentrated on the circumference of the first conductor portion top surface 62 where the extending direction of the surface is precipitously changed, and thus, the circumference easily becomes a starting point of peeling. In the wiring body 4 of this embodiment, the first protruding portion 65 is disposed along the circumference of the first conductor portion top surface 62, and thus, it is possible to more reliably suppress peeling between the first conductor portion and the second resin portion 7.

In this embodiment, the first protruding portion 65 is formed, and thus, there is a concern that the visibility of the wiring body decreases. However, originally, scattering of light easily occurs in the vicinity of the circumference where the extending direction of the surface is precipitously changed. For this reason, even in a case where the first protruding portion 65 is disposed, the first protruding portion 65 rarely affects on the degree of scattering of light on the first conductor portion top surface 62.

The wiring body 4 of this embodiment includes the second resin portion 7 and the second conductor portion 8, and a basic configuration of the second conductor portion 8 is the same as that of the first conductor portion 6. For this reason, it is possible to obtain the same functions and effects in the second conductor portion 8 as the functions and the effects described in the first conductor portion 6.

In this embodiment, the first and second conductor portions 6 and 8 configuring the first and second electrodes 67 and 87 are positioned on the same fifth virtual straight line $L_5$ in the see-through plan view, the first and second conductor portions end surfaces 64 and 84 are disposed to face each other in the see-through plan view, and the relationship of Expression (10) and Expression (11) described above is established. In this case, in the see-through plan view, the first and second conductor portions 6 and 8 do not overlap with each other, and thus, even in a case where the positions of the first and second conductor portions 6 and 8 are slightly shifted from each other in the width direction of the first and second conductor portions 6 and 8, it is possible to suppress forming a thick portion locally. In the see-through plan view, the first and second conductor portions 6 and 8 are maximally close to each other within a range where the first and second conductor portions 6 and 8 do not overlap with each other, and thus, the interval between the first and second conductor portions 6 and 8 is not conspicuous, and it is possible to form one continuous straight line by the first and second conductor portions 6 and 8 on appearance. Accordingly, the visibility of the wiring body 4 is further improved.

Embodiments heretofore explained are described to facilitate understanding of the present invention and are not described to limit the present invention. It is therefore intended that the elements disclosed in the above embodiments include all design changes and equivalents to fall within the technical scope of the present invention.

For example, the touch sensor of this embodiment is the projection electrostatic capacitance type touch panel sensor formed of the wiring body including two conductor patterns, but is not particularly limited thereto, and the present invention can also be applied to a surface (capacitive coupling) electrostatic capacitance type touch sensor formed of one conductor pattern.

In the embodiment described above, an inclination angle of the first conductor portion end surface 64 and an inclination angle of the second conductor portion end surface 84 are substantially equal to each other, but are not particularly limited thereto. For example, the inclination angle of the first conductor portion end surface 64 may be greater than the inclination angle of the second conductor portion end surface 84, or the inclination angle of the first conductor portion end surface 64 may be less than the inclination angle of the second conductor portion end surface 84.

For example, in the embodiment described above, the metal material or the carbon-based material is used as the conductive material (the conductive particles) configuring the first and second conductor portions 6 and 8, but the conductive material is not particularly limited thereto, and the metal material and the carbon-based material may be used by being mixed. In this case, for example, in a case of describing the first conductor portion 6 as an example, the carbon-based material may be provided on the first conductor portion top surface 62 side of the first conductor portion 6, and the metal material may be provided on the first conductor portion contact surface 61 side. On the contrary, the metal material may be provided on the first conductor portion top surface 62 side of first conductor portion 6, and the carbon-based material may be provided on the first conductor portion contact surface 61 side.

Although it is not particularly illustrated, the substrate 3 may be omitted from the wiring board 2 in the embodiment described above. In this case, for example, the wiring board may be configured such that a peeling sheet is disposed on a lower surface of the first resin portion 5, the peeling sheet is peeled off at the time of mounting the wiring board 2, and the wiring board 2 is adhesively mounted on a mounting target (a film, a surface glass, a deflection plate, a display glass or the like). In the wiring board 2, a resin portion functioning as an adhesive layer may be disposed between the wiring body 4 and the substrate 3. The wiring board 2 may be mounted on the mounting target described above through the resin portion. In a case where the wiring body is mounted on the mounting target, the mounting target corresponds to an example of the "support body" in the present invention.

In the embodiment described above, the first electrode 67 used in the touch sensor (a detection electrode) is configured of the first conductor portion of the present invention, but a dummy electrode which is electrically separated from the detection electrode may be disposed, and the dummy electrode may be configured of the first conductor portion of the present invention. Such a dummy electrode, for example, is included in the first conductor pattern 66 and is disposed between a side configuring the first wide portion 671 and a side configuring the second wide portion 871 which correspond to each other in the see-through plan view on appearance. In this case, the relationship of Expression (10) and Expression (11) described above may be established between the first conductor portion configuring the dummy electrode and the second conductor portion 8 of the second electrode 87. It is not particularly limited to the above description, the dummy electrode may be included in the second conductor pattern 86, and the dummy electrode may be configured of the second conductor portion of the present invention. Such a dummy electrode is disposed between the side configuring the first wide portion 671 and the side configuring the second wide portion 871 which face each other in the see-through plan view on appearance. In this case, the relationship of Expression (10) and Expression (11) described above may be established between the first conductor portion 6 configuring the first electrode 67 and the second conductor portion configuring the dummy electrode. The dummy electrode may be included in both of the first and second conductor patterns 66 and 86, the dummy electrode included in the first conductor pattern 66 may be configured of the first conductor portion of the present invention, and the dummy electrode included in the second conductor pattern 86 may be configured of the second conductor portion of the present invention. Such dummy electrodes are disposed between the side configuring the first wide portion 671 and the side configuring the second wide portion 871 which face each other in the see-through plan view on appearance. In this case, the relationship of Expression (10) and Expression (11) described above may be established between the first conductor portion 6 configuring the dummy electrode included in the first conductor pattern 66 and the second conductor portion 8 configuring the dummy electrode included in the second conductor pattern 86.

In the embodiment described above, the wiring body or the wiring board has been described as being used in the touch sensor, but is not particularly limited thereto. For example, the wiring body may be used as a heater by energizing the wiring body to generate heat according to resistance heating or the like. In this case, it is preferable that a carbon-based material having a high comparatively electrical resistance value is used as the conductive particles. A part of the conductor portion of the wiring body is grounded, and thus, the wiring body may be used as an electromagnetic shielding shield. The wiring body may be used as an antenna. In these case, the mounting target on which the wiring body is mounted corresponds to an example of the "support body" in the present invention.

EXPLANATIONS OF LETTERS OR NUMERALS

| | |
|---|---|
| 1 | touch sensor |
| 2 | wiring board |
| 3 | substrate |
| 4 | wiring body |
| 5 | first resin portion |
| 51 | first flat portion |
| 511 | first upper surface |
| 52 | first convex portion |
| 521 | first resin portion contact surface |
| 522 | convex portion end surface |
| 6 | first conductor portion |
| 61 | first conductor portion contact surface |
| 62 | first conductor portion top surface |
| 621 | first top surface flat portion |
| 63 | first conductor portion side surface |
| 631 | first side surface upper end |
| 632 | first side surface lower end |
| 633 | first side surface flat portion |
| 64 | first conductor portion end surface |
| 641 | first end surface upper end |
| 642 | first end surface lower end |
| 643 | first arc portion |
| 65 | first conductor portion protruding portion |
| 66 | first conductor pattern |
| 67 | first electrode |
| 68 | first lead-out wiring |
| 69 | first terminal |
| 7 | second resin portion |
| 71 | second flat portion |
| 711 | second upper surface |
| 72 | second protruding portion |
| 721 | second resin portion contact surface |
| 8 | second conductor portion |
| 81 | second conductor portion contact surface |
| 82 | second conductor portion top surface |

| 821 | second top surface flat portion |
| 83 | second conductor portion side surface |
| 831 | second side surface upper end |
| 832 | second side surface lower end |
| 833 | second side surface flat portion |
| 84 | first conductor portion end surface |
| 841 | second end surface upper end |
| 842 | second end surface lower end |
| 843 | second arc portion |
| 85 | first conductor portion protruding portion |
| 86 | second conductor pattern |
| 87 | second electrode |
| 88 | second lead-out wiring |
| 89 | second terminal |
| $L_1$ to $L_5$ | first to fifth virtual straight line |
| 100 | first intaglio |
| 101 | concave portion |
| 110 | first conductive material |
| 120 | first resin material |
| 140 | intermediate |
| 150 | second intaglio |
| 151 | concave portion |
| 160 | second conductive material |
| 170 | second resin material |

**Claims**

1. A wiring body, comprising:

   a first resin portion; and
   a first conductor portion which is linear and is disposed on the first resin portion, wherein the first conductor portion includes a first end surface which is positioned at a tip end of the first conductor portion in a first extending direction of the first conductor portion, and a following Expression (1) is satisfied;

$$W_1/T_1 \leq 1 \ldots (1)$$

   where, in the Expression (1),
   $W_1$ is a first length obtained by projecting the first end surface on a plane parallel to the first extending direction, and
   $T_1$ is a height of the first conductor portion.

2. The wiring body according to claim 1, wherein the first conductor portion includes:

   a contact surface which is in contact with the first resin portion;
   a top surface which is positioned on a side opposite to the contact surface; and
   a side surface which is interposed between the contact surface and the top surface and is connected to the first end surface, and
the first end surface includes an arc portion which is connected to the side surface.

3. The wiring body according to claim 2, wherein a following Expression (2) is satisfied;

$$W_1 = W_2 \ldots (2)$$

   where, in the Expression (2),
   $W_2$ is a second length obtained by projecting the side surface on a plane parallel to a width direction of the first conductor portion.

4. The wiring body according to claim 2 or 3, wherein the first conductor portion includes a protruding portion which is formed along a circumference of the top surface and protrudes towards a side separated from the first resin portion.

5. The wiring body according to any one of claims 1 to 4, wherein
   the height of the first conductor portion is 500 nm to 10 $\mu$m.

6. The wiring body according to any one of claims 1 to 5, wherein
   the first resin portion includes:

   a flat portion which is formed in the shape of a layer; and
   a convex portion which is disposed corresponding to the first conductor portion and protrudes towards the first conductor portion side from the flat portion,
   the convex portion includes a third end surface which is positioned at the tip end in the first extending direction,
   the first end surface and the third end surface are continuously connected to each other, and a following Expression (3) is satisfied;

$$W_5/T_2 \leq 1 \ldots (3)$$

   where, in the Expression (3),
   $W_5$ is a sum of the first length and a length obtained by projecting the third end surface on the plane parallel to the first extending direction, and
   $T_2$ is a sum of the height of the first conductor portion and a height of the convex portion.

7. The wiring body according to any one of claims 1 to 6, further comprising:

   a second resin portion which is disposed to cover the first conductor portion; and

a second conductor portion which is linear, is disposed on the second resin portion and has a height substantially equal to a height of the first conductor portion, wherein

the second conductor portion includes a second end surface positioned at a tip end of the second conductor portion in a second extending direction of the second conductor portion,

the first and second conductor portions are positioned on the same virtual straight line in a see-through plan view,

the first and second end surfaces are disposed to face each other in the see-through plan view, and

following Expression (4) and Expression (5) are satisfied;

$$(W_4 - W_3) \times 0.5/T_1 \leq 1 \ \ldots(4)$$

$$W_3 < 50 \ \mu m \ \ldots(5)$$

where, in the Expression (4) and Expression (5), $W_3$ is a third length which is the shortest length of lengths obtained by projecting an interval of the first and second end surfaces on a plane parallel to a third extending direction of the virtual straight line, and

$W_4$ is a fourth length which is the longest length of the lengths obtained by projecting the interval of the first and second end surfaces on the plane parallel to the third extending direction.

8. A wiring board, comprising:

the wiring body according to any one of claims 1 to 7; and
a support body supporting the wiring body.

9. A touch sensor, comprising:

the wiring board according to claim 8.

FIG. 1

EP 3 438 800 A1

FIG. 2

EP 3 438 800 A1

FIG. 3

FIG. 4

FIG. 5

EP 3 438 800 A1

EP 3 438 800 A1

FIG. 6

FIG. 7

FIG. 8(A)   FIG. 8(B)   FIG. 8(C)

FIG. 8(D)   FIG. 8(E)

EP 3 438 800 A1

FIG. 9(A)　　　　　　FIG. 9(B)　　　　　　FIG. 9(C)

FIG. 9(D)　　　　　　FIG. 9(E)

EP 3 438 800 A1

## INTERNATIONAL SEARCH REPORT

| | International application No. |
|---|---|
| | PCT/JP2017/013269 |

**A. CLASSIFICATION OF SUBJECT MATTER**
*G06F3/041*(2006.01)i, *G06F3/044*(2006.01)i, *H05K1/02*(2006.01)i

According to International Patent Classification (IPC) or to both national classification and IPC

**B. FIELDS SEARCHED**

Minimum documentation searched (classification system followed by classification symbols)
G06F3/041, G06F3/044, H05K1/02

Documentation searched other than minimum documentation to the extent that such documents are included in the fields searched
Jitsuyo Shinan Koho           1922–1996   Jitsuyo Shinan Toroku Koho   1996–2017
Kokai Jitsuyo Shinan Koho     1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2014-123338 A  (Samsung Electro-Mechanics Co., Ltd.),<br>03 July 2014 (03.07.2014),<br>paragraphs [0038] to [0048], [0083] to [0086];<br>fig. 1, 2, 7<br>& US 2015/0116252 A1<br>paragraphs [0046] to [0055], [0086] to [0089];<br>fig. 1, 2, 7<br>& US 2014/0174200 A1    & KR 10-2014-0082430 A | 1,8,9<br>2,3,5,7<br>4,6 |
| Y<br>A | WO 2014/119231 A1  (Sharp Corp.),<br>07 August 2014 (07.08.2014),<br>paragraph [0084]; fig. 7(c)<br>& US 2015/0370375 A1<br>paragraph [0109]; fig. 7(c)<br>& TW 201443755 A         & CN 104956296 A | 2,3,5,7<br>1,4,6,8,9 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 April 2017 (26.04.17) | 16 May 2017 (16.05.17) |

| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |
|---|---|

Form PCT/ISA/210 (second sheet) (January 2015)

**EP 3 438 800 A1**

**INTERNATIONAL SEARCH REPORT**

International application No.

PCT/JP2017/013269

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | WO 2015/146277 A1  (Kaneka Corp.),<br>01 October 2015 (01.10.2015),<br>paragraphs [0063] to [0122]; fig. 1 to 8<br>& US 2017/0017335 A1<br>paragraphs [0114] to [0246]; fig. 1 to 8<br>& CN 105814529 A | 3,5,7<br>1,2,4,6,8,9 |
| Y<br>A | JP 2011-175412 A  (Shin-Etsu Polymer Co., Ltd.),<br>08 September 2011 (08.09.2011),<br>paragraphs [0021] to [0033]; fig. 1 to 4<br>(Family: none) | 7<br>1-6,8,9 |
| A | JP 2014-16944 A  (Dainippon Printing Co., Ltd.),<br>30 January 2014 (30.01.2014),<br>paragraphs [0108], [0130]; fig. 1 to 4, 15 to 17<br>& US 2015/0177876 A1<br>paragraphs [0148], [0173], [0174]; fig. 1 to 4, 15 to 17<br>& WO 2014/010620 A1     & TW 201423511 A<br>& CN 104428738 A        & KR 10-2015-0017380 A | 1-9 |
| A | JP 2015-195004 A  (Fujifilm Corp.),<br>05 November 2015 (05.11.2015),<br>paragraphs [0039] to [0042]; fig. 3<br>& WO 2015/146447 A1 | 1-9 |

Form PCT/ISA/210 (continuation of second sheet) (January 2015)

28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016067614 A
- JP 2012256320 A

- WO 2008149969 A